# EUROPEAN PATENT SPECIFICATION

(11) **EP 1 561 210 B1**
(45) Date of publication and mention of the grant of the patent: **06.02.2008**
(21) Application number: 03748481.3
(22) Date of filing: 15.10.2003
(51) Int. Cl.: G11B 7/085, G11B 21/08

(54) **OPTICAL DISC DRIVE APPARATUS, METHOD OF CONTROLLING THE POSITION OF OPTICAL PICKUP UNIT, METHOD OF DETECTING AN INNERMOST POSITION OF AN OPTICAL PICKUP UNIT**
OPTISCHER PLATTENSPIELER, VERFAHREN ZUR EINSTELLUNG DER POSITION EINER OPTISCHEN ABTASTVORRICHTUNG UND VERFAHREN ZUM DETEKTION DER INNERSTEN POSITION DER OPTISCHEN ABTASTVORRICHTUNG
APPAREIL LECTEUR DE DISQUE OPTIQUE, PROCEDE DE COMMANDE DE LA POSITION DE L'UNITE DE LECTURE OPTIQUE, PROCEDE DE DETECTION D'UNE POSITION TERMINALE D'UNE UNITE DE LECTURE OPTIQUE

(30) Priority: 06.11.2002 WO PCT/SG02/00300
(43) Date of publication of application: 10.08.2005
(73) Proprietor: Koninklijke Philips Electronics N.V., 5621 BA Eindhoven (NL)
(72) Inventor: LOW, Yee, C., Nl-5656 AA Eindhoven (NL)
(74) Representative: van der Veer, Johannis Leendert
(86) International application number: PCT/IB2003/004574
(87) International publication number: WO 2004/042713

(56) References cited:
- US-B1- 6 320 824
- PATENT ABSTRACTS OF JAPAN vol. 011, no. 261 (P-609), 25 August 1987 (1987-08-25) & JP 62 066478 A (TOYO COMMUN EQUIP CO LTD), 25 March 1987 (1987-03-25)

## Description

This invention relates to an optical disc drive apparatus having a turntable body for rotating a data disc, an optical pickup unit (OPU), means for moving the optical pickup unit for reading a data disc while the disc is being rotated, and means for determining an innermost position of the optical pickup unit correspondingly. The invention also relates to a method of controlling the position of an optical pickup unit in an optical disc drive apparatus having a turntable body. This invention further relates to a method of detecting an innermost position of an optical pickup head in an optical disc drive apparatus having a turntable body. Examples of optical disc drive apparatuses are a CD (compact disc) drive apparatus, an MD (mini disc) drive apparatus, and a DVD (digital versatile disc) drive apparatus.

Embodiments of an optical disc drive apparatus and a method as described in the opening paragraph are known from United States Patent US 6,320,824 B1. The prior-art device includes an optical pickup unit. When a data disc is placed in the device, the optical pickup unit starts to read out information from the disc. The prior-art device includes an innermost position switch connected to a microcomputer. When the optical pickup head reaches its innermost position, the body of the head encounters a control arm of the innermost position switch and changes the switch to its ON state. In this case, a microcomputer is informed that the innermost position switch changes to its ON state. The change of the innermost position switch to its ON state indicates that the optical pickup unit has reached its innermost position. The microcomputer reverses the motion of the pick up unit in response to the change of the innermost position switch to its ON state. Accordingly, when the optical pickup unit reaches its innermost position, the motion is reversed so that the optical pickup unit stops and then starts to move back toward its outermost position. This conventional device and method, however, require many components such as a switch, connectors, screws etc.

It is an object of this invention to provide a simple device and method of controlling the position of an optical pickup unit and a simple detection method.

To this end, the device in accordance with the invention is characterized in that the device comprises a means for rotating the turntable body at a speed lower than the operating speed, means for moving the optical pickup unit towards an innermost position, means for sensing a change in speed as the optical pickup unit contacts the turntable body, and means for producing an indication signal in response to said sensing of said change.

The method in accordance with the invention is characterized in that the turntable body is rotated at a speed lower than the operating speed, the optical pickup unit is moved towards an innermost position, a change in speed is sensed as the optical pickup unit contacts the turntable body, and an indication signal is produced in response to said sensing of said change.

The invention is based on the following basic principle:

Before reading of the data disc, the turntable body is rotated at a relatively low speed, and the optical pickup unit is moved towards an innermost position. When the optical pickup unit contacts the turntable body, an increase in friction of the turntable occurs, which will slow down the turntable. The device is provided with means, e.g. electronics in or near the turntable or a computer program, with which the slowing down is measurable, e.g. in the tacho signal. The device has means which produce an indication signal, which indicates that the optical pickup unit is at the innermost position. Subsequently the motion of the optical pickup unit is reversed and the optical pickup unit is moved outward. The TOC (table of contents) may be read and the servo may cut in to take over the control system as in conventional devices and methods. The invention eliminates the components and electronics for the switch and all the assembly processes and components associated with the switch.

Preferably, the optical pickup unit comprises a friction pad to provide friction between the optical pickup unit and the turntable body. Such a friction pad improves the efficiency of the device and method.

Preferably, the indication signal is derived from the tacho signal. Standard turntable body electronics provide for a tacho signal (a signal indicative of rotational speed of the turntable body). Friction will change the rotational speed of the turntable body and thereby the tacho signal, which can be taken as indicative of contact, and thus of the fact that the optical pickup unit has reached the innermost position. Owing to its simplicity, the new invention is applicable, to existing designs with only minor adjustments.

In addition, the friction pad may help to reduce the total spin down time in those embodiments in which a friction pad is used.

Within the concept of the invention, a 'means for rotating' and "means for moving" as well as "means for sensing", "means for producing is" to be broadly understood and to comprise e.g. any piece of hardware (such a rotator, motor, sensor), any circuit or subcircuit designed for performing or aiding in a rotation, movement, sensing, signal production as described, any piece of software (computer program or sub-program or set of computer programs, or program code(s)) designed or programmed to perform an action in accordance with the invention, as well as any combination of pieces of hardware and software acting as such, alone or in combination, without being restricted to the exemplary embodiments given below. More than one means may be combined into one piece of hardware or software in embodiments.
FIG. 1 is a schematic design of a portion of a prior-art CD player.
FIG. 2 is a schematic representation of another prior art design.
FIG. 3 is a schematic plan view of a device in accordance with the invention.
FIG. 4 schematically illustrates a measurement scheme for a tacho signal.

The Figures are not drawn to scale. Generally, identical components are denoted by the same reference numerals in the Figures.

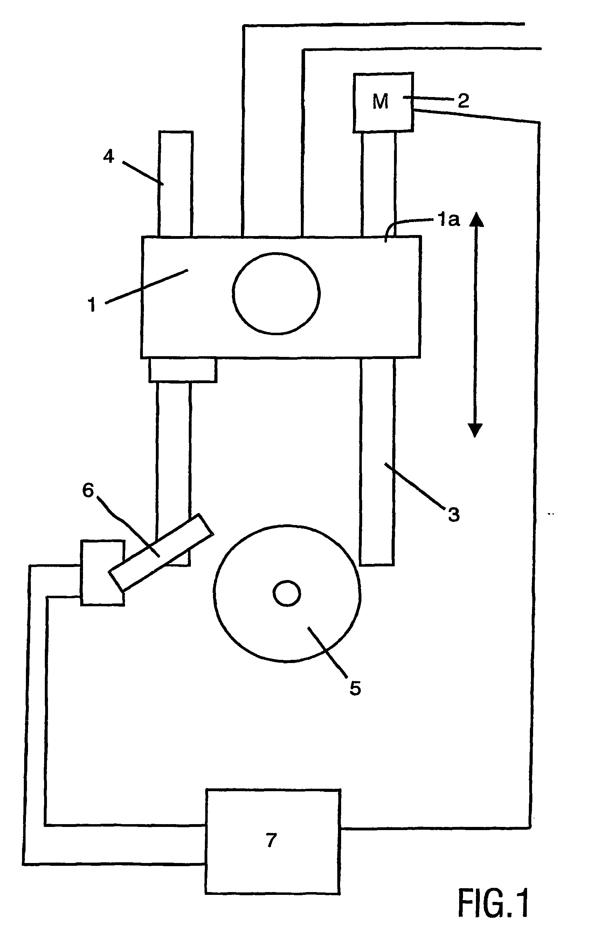

A prior-art device will be explained below for a better understanding of this invention. FIG. 1 shows a portion of the prior-art CD player comprising an optical pickup unit 1, a motor 2, a lead screw 3, and a guide shaft 4.

The optical pickup head 1 can move in a direction indicated by the doubleheaded arrow, also denoted the traverse direction below, between an innermost position and an outermost position with respect to a disc (a data disc, for instance a compact disc, that is, a CD) placed in the device. The guide shaft 4 extends along the traverse direction. The optical pickup head 1 has a portion engaging the guide shaft 4. The optical pickup head 1 is guided by the guide shaft 4 during its movement in the traverse direction.

The optical pickup head 1 includes an engagement portion la having a threaded hole through which the lead screw 3 extends.

The engagement portion 1a meshes with the lead screw 3. The lead screw 3 is coupled to an output shaft of the traverse motor 2 via a gear train so that the lead screw 3 can be rotated by the traverse motor 2. As the lead screw 3 rotates, the optical pickup head 1 moves in the traverse direction.

A disc is held in position on a turntable body 5 in operation. Then, the optical pickup head 1 is moved to its innermost position.

The prior-art CD player of FIG. 1 includes an innermost position switch 6 of a push type near an end of the guide shaft 4. When the optical pickup head 1 reaches its innermost position, the body of the head 1 encounters a control arm of the innermost position switch 6 and changes the switch 8 to its ON state. Accordingly, the change of the innermost position switch 6 to its ON state indicates that the optical pickup head 1 has reached its innermost position. The innermost position switch 6 includes a return spring which urges the control arm. The return spring causes the innermost position switch 6 to be normally in its OFF state.

The innermost position switch 6 has a pair of a fixed contacts and a movable contact. The movable contact is connected to and disconnected from a fixed contact in accordance with movement of the control arm of the switch 6. When the optical pickup head 1 assumes its innermost position, the body of the head 1 engages the control arm of the innermost position switch 6 so that the movable contact of the switch 6 touches a fixed contact thereof. Accordingly, in this case, the innermost position switch 6 changes to its ON state. When the optical pickup head 1 moves out of its innermost position, the body of the head 1 becomes separated from the control arm of the innermost position switch 6 so that the movable contact of the switch 8 is disconnected from the fixed contact thereof. Accordingly, in this case, the innermost position switch 6 changes to its OFF state.

The prior-art CD player includes a control circuit 7. The innermost position switch 6 is connected to the control circuit 7. The control circuit 7 is connected to the motor 2. The control circuit 7 regulates that, when the optical pickup unit reaches its innermost position, the motion is reversed so that the optical pickup unit stops and then starts to move back toward its outermost position. This conventional device and method, however, requires many components such as a switch, connectors, screws etc.

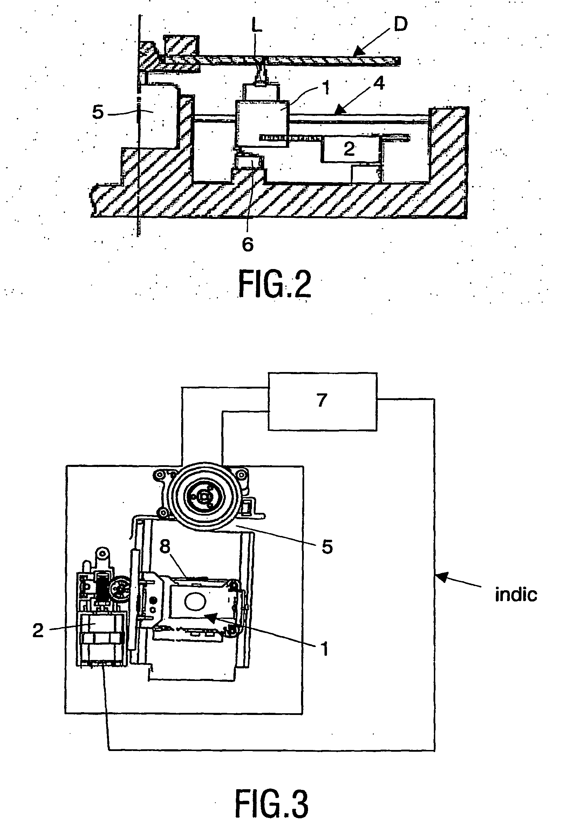

FIG. 2 illustrates a second example of a prior art device. In this Figure the laser L and the disc D are indicated. In this example the switch is located below the optical pickup unit. Although there are a few differences between the designs as shown in FIGS. 1 and 2, both designs require many components such as a switch, connectors, screws etc.

FIG. 3 illustrates a device in accordance with the invention. The control circuit 7 comprises a circuit or a program for rotating the turntable body 5 at a low speed while the optical pickup is being moved towards the innermost position. Contact between the optical pickup unit and the turntable unit, in this preferred embodiment via a friction pad 8 on the optical pickup unit, causes the rotational speed of the turntable body 5 to decrease changing the tacho signal. The change in the tacho signal is detected by the control circuit and a signal I_{idnic} is produced, indicating that the optical pickup unit is at the innermost position. This signal may be produced within the control unit, which control unit then controls the motion of the motor 2, or, as in this example, the signal I_{indic} is sent to the electronics in or near the motor 2, which reacts to this signal. The motion of the optical pickup unit is reversed, and the optical pickup unit is moved outward. The TOC (table of contents) may be read and the servo may cut in to take over the control system as in conventional devices and methods. The invention eliminates the components and electronics for the switch and all the assembly processes and components associated with the switch.

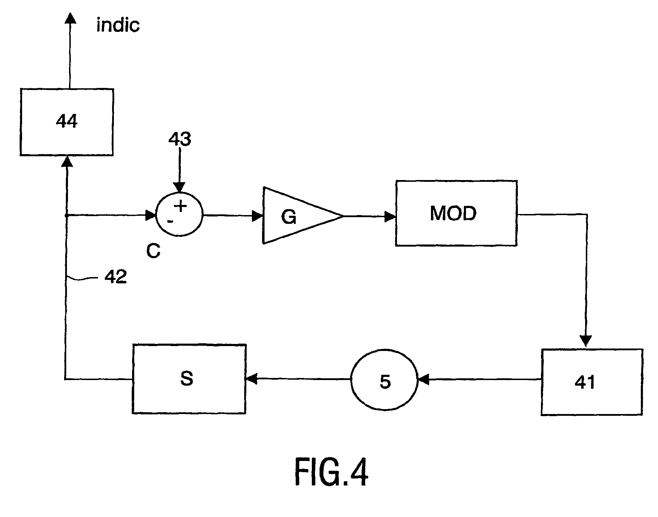

FIG. 4 illustrates very schematically a measurement scheme for measuring the tacho signal and regulating the speed of the motor 5. The motor 5 is controlled by a motor driver 41. A tacho sensor S is provided for measuring the rotational speed of the motor (or a corresponding physical quantity). The tacho sensor provides a tacho signal 42. This signal 42 is compared with a target speed signal 43 in comparator C, thus comparing the actual speed to a target speed. The difference signal is amplified in gain stage G and sent to a modulator MOD, which sends a signal to the motor driver 41. In this manner the speed of the motor is regulated to equal the target speed. In this example the tacho speed signal 42 is sent to a microcontroller 44. When the microcontroller 44 senses a decrease of the tacho speed, as contact is made between the optical pickup unit and the turntable body, an indicative signal I_{indic} is produced. The microcontroller can sense such a decrease by comparing, for example, the tacho speed signal 42 with a gauge speed signal, which is e.g. somewhat smaller than the target speed signal. The decrease may also be measured by measuring the differential of the tacho signal. A relatively large differential d(tacho speed)/dt will be apparent upon contact. In embodiments, the difference signal supplied by comparator C may also be used to sense a sudden change in the tacho speed. The indicative signal I_{indic} is produced in such embodiments, for example, when the difference signal is larger than a particular value, indicating a sudden decrease of the rotational speed of the turntable body.

In short, the invention may be described as follows:

An optical disc drive apparatus comprises a turntable body (5) for rotating a data disc, an optical pickup unit (1), a motor (2) for moving the optical pickup unit, and means for determining an innermost position of the optical pickup unit. The turntable body is rotated at a speed lower than the operating speed when the optical pickup unit is being moved towards an innermost position. A change in speed as the optical pickup unit (1) contacts the turntable body (5) is measured, and an indication signal (I_{indic}) is produced in response to said change. The indication signal is used to reverse the motion of the optical pickup unit.

It will be appreciated by persons skilled in the art that the present invention is not limited by what has been particularly shown and described hereinabove. For example, devices are shown in the drawings in which the optical pickup unit is moved along shafts. In other embodiments the optical pickup unit may be provided on a swing arm. The invention is then equally applicable. The means for moving the optical pickup unit comprises the swing arm in such embodiments.

The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

The present invention has been described in terms of specific embodiments, which are illustrative of the invention and not to be construed as limiting. The invention may be implemented in hardware, firmware, or software, or in a combination of them. Other embodiments are within the scope of the following claims.

## Claims

1. An optical disc drive apparatus having a turntable body (5) for rotating a data disc, an optical pickup unit (1), means (2) for moving the optical pickup unit for reading a data disc while the disc is being rotated, and means for determining an innermost position of the optical pickup unit,
**characterized in that**
the device comprises a means (5, 7) for rotating the turntable body at a speed lower than the operating speed, means (2) for moving the optical pickup unit towards an innermost position, means for sensing a change in speed as the optical pickup unit (1) contacts the turntable body (5), and means for producing an indication signal (I_{indic}) in response to said sensing of said change.

2. An optical disc drive apparatus as claimed in claim 1, **characterized in that** the optical pickup unit (1) comprises a friction pad (8).

3. A method of controlling the position of an optical pickup unit (1) in an optical disc drive apparatus having a turntable body (5),
**characterized in that**
the turntable body (5) is rotated at a speed lower than the operating speed, the optical pickup unit (1) is moved towards an innermost position, a change in speed is sensed as the optical pickup unit (1) contacts the turntable body (5), and an indication signal (I_{indic}) is produced in response to said sensing of said change.

4. A method of detecting an innermost position of an optical pickup head (1) in an optical disc drive apparatus (5) having a turntable body, **characterized in that** the turntable body (5) is rotated at a speed lower than the operating speed, the optical pickup unit (1) is moved towards an innermost position, a change in speed is sensed as the optical pickup unit (1) contacts the turntable body (5), and an indication signal (I_{indic}) is produced in response to said sensing of said change.

5. A method as claimed in claim 3 or 4, **characterized in that** contact between the optical pickup unit (1) and the turntable body (5) is made via a friction pad (8).

## Patentansprüche

1. Optisches Plattenlaufwerksgerät mit einem Plattentellerkörper (5) zum Drehen einer Datenplatte, einer optischen Abtasteinheit (1), Mitteln (2) zum Bewegen der optischen Abtasteinheit, um eine Datenplatte zu lesen, während die Platte gedreht wird, und Mitteln, um die innerste Position der optischen Abtasteinheit entsprechend zu bestimmen,
**dadurch gekennzeichnet, dass**
die Einrichtung Mittel (5, 7) zum Drehen eines Plattentellerkörpers mit einer Drehzahl unterhalb der Betriebsdrehzahl, Mittel (2) zum Bewegen der optischen Abtasteinheit in Richtung einer innersten Position, Mittel zum Erfassen einer Drehzahländerung, wenn die optische Abtasteinheit (1) den Plattentellerkörper (5) berührt, und Mittel zum Erzeugen eines Anzeigesignals (I_{indic}) als Reaktion auf das Erfassen der Änderung umfasst.

2. Optisches Plattenlaufwerksgerät nach Anspruch 1, **dadurch gekennzeichnet, dass** die optische Abtasteinheit (1) einen Reibungsbelag (8) umfasst.

3. Verfahren zum Steuern der Position einer optischen Abtasteinheit (1) in einem optischen Plattenlaufwerksgerät mit einem Plattentellerkörper (5),
**dadurch gekennzeichnet, dass**
der Plattentellerkörper (5) mit einer Drehzahl unterhalb der Betriebsdrehzahl gedreht wird, die optische Abtasteinheit (1) in Richtung einer innersten Position bewegt wird, eine Drehzahländerung erfasst wird, wenn die optische Abtasteinheit (1) den Plattentellerkörper (5) berührt, und ein Anzeigesignal (I_{indic}) als Reaktion auf das Erfassen der Änderung erzeugt wird.

4. Verfahren zum Erkennen einer innersten Position eines optischen Abtastkopfes (1) in einem optischen Plattenlaufwerksgerät (5) mit einem Plattentellerkörper **dadurch gekennzeichnet, dass** der Plattentellerkörper (5) mit einer Drehzahl unterhalb der Betriebsdrehzahl gedreht wird, die optische Abtasteinheit (1) in Richtung einer innersten Position bewegt wird, eine Drehzahländerung erfasst wird, wenn die optische Abtasteinheit (1) den Plattentellerkörper (5) berührt, und ein Anzeigesignal (I_{indic}) als Reaktion auf das Erfassen der Änderung erzeugt wird.

5. Verfahren nach Anspruch 3 oder 4, **dadurch gekennzeichnet, dass** die Berührung zwischen der optischen Abtasteinheit (1) und dem Plattentellerkörper (5) über einen Reibungsbelag (8) erfolgt.

## Revendications

1. Appareil d'entraînement de disque optique ayant un corps de platine (5) pour faire tourner un disque de données, une unité optique de prise (1), des moyens (2) pour déplacer l'unité optique de prise pour la lecture d'un disque de données alors que le disque est en cours d'être tourné et des moyens pour déterminer une position le plus à l'intérieur de l'unité optique de prise,
**caractérisé en ce que** le dispositif comprend des moyens (5, 7) pour faire tourner le corps de platine à une vitesse inférieure à la vitesse de fonctionnement, des moyens (2) pour déplacer l'unité optique de prise vers une position le plus à l'intérieur, des moyens (2) pour déplacer l'unité optique de prise vers une position le plus à l'intérieur, des moyens pour détecter un changement de la vitesse au fur et à mesure que l'unité optique de prise (1) entre en contact avec le corps de platine (5) et des moyens pour produire un signal d'indication (I_{indic}) en réaction à ladite détection dudit changement.

2. Appareil d'entraînement de disque optique selon la revendication 1,
**caractérisé en ce que** l'unité optique de prise (1) comprend une plage de frottement (8).

3. Procédé de commande de la position d'une unité optique de prise (1) dans un appareil d'entraînement de disque optique ayant un corps de platine (5),
**caractérisé en ce que** le corps de platine (5) est tourné à une vitesse inférieure à la vitesse de fonctionnement, l'unité optique de prise (1) est déplacée vers une position le plus à l'intérieur, un changement de vitesse est détecté au fur et à mesure que l'unité optique de prise (1) entre en contact avec le corps de platine (5) et un signal d'indication (I_{indic}) est produit en réaction à ladite détection dudit changement.

4. Procédé de détection d'une position le plus à l'intérieur d'une tête optique de prise (1) dans un appareil d'entraînement de disque optique (5) ayant un corps de platine,
**caractérisé en ce que** le corps de platine (5) est tourné à une vitesse inférieure à la vitesse de fonctionnement, l'unité optique de prise (1) est déplacée vers une position le plus à l'intérieur, un changement de vitesse est détecté au fur et à mesure que l'unité optique de prise (1) entre en contact avec le corps de platine (5) et un signal d'indication (I_{indic}) est produit en réaction à ladite détection dudit changement.

5. Procédé selon la revendication 3 ou 4, **caractérisé en ce que** le contact entre l'unité optique de prise (1) et le corps de platine (5) est établi par le biais d'une plage de frottement (8).
